# EUROPEAN PATENT APPLICATION

(11) **EP 4 564 545 A1**
(43) Date of publication of application: **04.06.2025**
(21) Application number: 23218039.8
(22) Date of filing: 19.12.2023
(51) Int. Cl.: H01M 50/147, H01M 10/04, H01M 50/148, H01M 50/172, H01M 50/562, H01M 50/566

(54) **COVER PLATE ASSEMBLY, BATTERY CELL, AND BATTERY PACK**

(30) Priority: 30.11.2023 CN 202323260371 U
(71) Applicant: AESC Japan Ltd., Yokohama-Shi, Kanagawa 220-0012 (JP)
(72) Inventor: YU, He, Jiangyin City, Wuxi City, Jiangsu Province, 214443 (CN)
(74) Representative: Becker, Eberhard

(57) **Abstract**

A cover plate assembly (100), a battery cell, and a battery pack are provided. The cover plate assembly (100) includes a cover plate body (10) provided with a through hole; an outer conductive member (20) disposed on a side of the cover plate body (10) away from an electrode assembly and including a first metal layer (21), a second metal layer (22), and a third metal layer (23) disposed between the first metal layer (21) and the second metal layer (22). The third metal layer (23) is respectively connected to the first metal layer (21) and the second metal layer (22) to form a first composite layer and a second composite layer. The first composite layer includes a first metal and a third metal. The second composite layer includes a second metal and the third metal.

## Description

### BACKGROUND

### Technical Field

The disclosure relates to the technical field of battery cells, and particularly relates to a cover plate assembly, a battery cell, and a battery pack.

### Description of Related Art

The inventor knows a way to connect a battery cell to an external electrical connection member through an outer conductive member in the battery cell. The outer conductive member is generally composed of a copper plate and an aluminum plate. The copper plate and the aluminum plate are fixedly connected through riveting, but in this way, a gap is likely to exist at a connection between the copper plate and the aluminum plate, which causes the connection to be unreliable.

### SUMMARY

In view of the above shortcomings of the prior art, the objective of the disclosure is to provide a cover plate assembly and a battery cell to improve the current manner of fixing a copper plate and an aluminum plate in an outer conductive member of a battery cell through riveting such that a gap is likely to exist at a connection between the copper plate and the aluminum plate, which causes the connection to be unreliable.

In order to achieve the above objective and other related objectives, the disclosure provides a cover plate assembly, which includes a cover plate body, an outer conductive member, and an electrode lead-out member. The cover plate body is provided with a through hole. The outer conductive member is disposed on a side of the cover plate body away from an electrode assembly. The outer conductive member includes a first metal layer, a second metal layer, and a third metal layer disposed between the first metal layer and the second metal layer. The first metal layer includes a first metal, the second metal layer includes a second metal, and the third metal layer includes a third metal. The third metal layer is respectively connected to the first metal layer and the second metal layer to form a first composite layer and a second composite layer. The first composite layer includes the first metal and the third metal. The second composite layer includes the second metal and the third metal. The electrode lead-out member passes through the through hole and is electrically connected to the outer conductive member.

In an embodiment of the disclosure, a content of the first metal in the first composite layer increases in a direction away from the first metal layer toward the first metal layer.

Alternatively, a content of the second metal in the second composite layer increases in a direction away from the second metal layer toward the second metal layer.

In an embodiment of the disclosure, the content of the second metal in the second composite layer is greater than the content of the first metal in the first composite layer.

In an embodiment of the disclosure, the third metal layer covers at least a part of a surface of the first metal layer close to the second metal layer or a part of a surface of the second metal layer close to the first metal layer.

In an embodiment of the disclosure, the third metal layer completely covers one with a larger area of the surface of the first metal layer close to the second metal layer and the surface of the second metal layer close to the first metal layer, and the third metal layer evenly covers the surface of the first metal layer close to the second metal layer or the surface of the second metal layer close to the first metal layer.

In an embodiment of the disclosure, a surface of one of the first metal layer and the second metal layer close to other one of the first metal layer and the second metal layer is provided with at least one protrusion, a surface of the other one of the first metal layer and the second metal layer close to the one of the first metal layer and the second metal layer is provided with a first fitting hole corresponding to the at least one protrusion, the third metal layer is provided with a second fitting hole corresponding to the at least one protrusion, and the at least one protrusion is fittingly connected to the corresponding first fitting hole and second fitting hole.

In an embodiment of the disclosure, a surface of the first metal layer close to the second metal layer is provided with the at least one protrusion, a surface of the second metal layer close to the first metal layer is provided with the first fitting hole fitted to the at least one protrusion, the third metal layer is provided with the second fitting hole fitted to the at least one protrusion, and the at least one protrusion is fittingly connected to the corresponding first fitting hole and second fitting hole.

In an embodiment of the disclosure, the at least one protrusion is symmetrically distributed on one of the first metal layer and the second metal layer along a central axis of the outer conductive member, the first fitting holes are symmetrically distributed on other one of the first metal layer and the second metal layer along the central axis of the outer conductive member, and the second fitting holes are symmetrically distributed on the third metal layer along the central axis of the outer conductive member.

In an embodiment of the disclosure, an outer surface of the at least one protrusion or an inner surface of the first fitting hole is covered with the third metal layer.

In an embodiment of the disclosure, along a radial direction of the outer conductive member, in a direction away from the through hole toward the through hole, a part of a surface of the second metal layer close to the first metal layer that exceeds the first metal layer is not covered with the third metal layer, and a thickness of the third metal layer is set between 0.5 µm and 1000 µm.

In an embodiment of the disclosure, the thickness of the third metal layer is set between 5 µm and 10 µm.

In an embodiment of the disclosure, a thickness of the second composite layer is d, a total thickness of the first composite layer and the second composite layer is a, and a relational expression 0.2a≤d≤0.9a is satisfied, and the third metal layer includes at least one of nickel, silver, and tin.

The disclosure also provides a battery cell, including the cover plate assembly according to any one of the above embodiments.

The disclosure also provides a shell, installed with the electrode assembly.

An end of the electrode lead-out member in the cover plate assembly is connected to the electrode assembly, and other end passes through the through hole and is electrically connected to the second metal layer in the cover plate assembly.

The disclosure also provides a battery pack, including the battery cell.

The disclosure provides the cover plate assembly, the battery cell, and the battery pack. Through setting the third metal layer between the first metal layer and the second metal layer, the third metal layer respectively forms the first composite layer including the first metal and the third metal with the first metal layer and forms the second composite layer including the second metal and the third metal with the second metal layer. That is, the metal composite layers are formed at the contact positions of the third metal layer and the first metal layer and the second metal layer to ensure the reliability and stability of the connection between the first metal layer and the second metal layer, and the third metal layer can fill the gap between the first metal layer and the second metal layer to further improve the reliability and stability of the connection between the first metal layer and the second metal layer.

### BRIEF DESCRIPTION OF THE DRAWINGS

In order to more clearly illustrate the technical solutions of the embodiments of the disclosure, the drawings required for describing the embodiments will be briefly introduced below. Obviously, the drawings in the following description are only some embodiments of the disclosure. For persons of ordinary skill in the art, other drawings can also be obtained according to these drawings without inventive efforts.
FIG. 1 is a schematic view of a structure of a cooperative connection manner of a copper layer and an aluminum layer in the prior art.
FIG. 2 is a schematic view of a structure of a cover plate assembly in an embodiment of the disclosure.
FIG. 3 is a schematic view of an exploded structure of a cover plate assembly in an embodiment of the disclosure.
FIG. 4 is a schematic view of a cross-sectional structure of an outer conductive member in an embodiment of the disclosure.
FIG. 5 is a schematic top view of an outer conductive member in a cover plate assembly in an embodiment of the disclosure.
FIG. 6 is a schematic view of an exploded structure of an outer conductive member in a cover plate assembly in an embodiment of the disclosure.
FIG. 7 is a schematic view of another exploded structure of an outer conductive member in a cover plate assembly in an embodiment of the disclosure.
FIG. 8 is a schematic view of a cross-sectional structure of an outer conductive member along A-A in FIG. 5.

### DESCRIPTION OF THE EMBODIMENTS

The following describes the implementation of the disclosure through specific examples. Persons skilled in the art can easily understand other advantages and effects of the disclosure from the content disclosed in the specification. The disclosure can also be implemented or applied through other different specific implementations. Various modifications or changes may also be made to the details in the specification based on different viewpoints and applications without departing from the spirit of the disclosure.

It should be noted that the drawings provided in the embodiments only illustrate the basic concept of the disclosure in a schematic manner, and the drawings only show the assemblies related to the disclosure and are not drawn according to the number of assemblies, shapes, and sizes during actual implementation. During actual implementation, the type, number, and proportion of each assembly can be changed at will, and the layout type of the assembly may also be more complex.

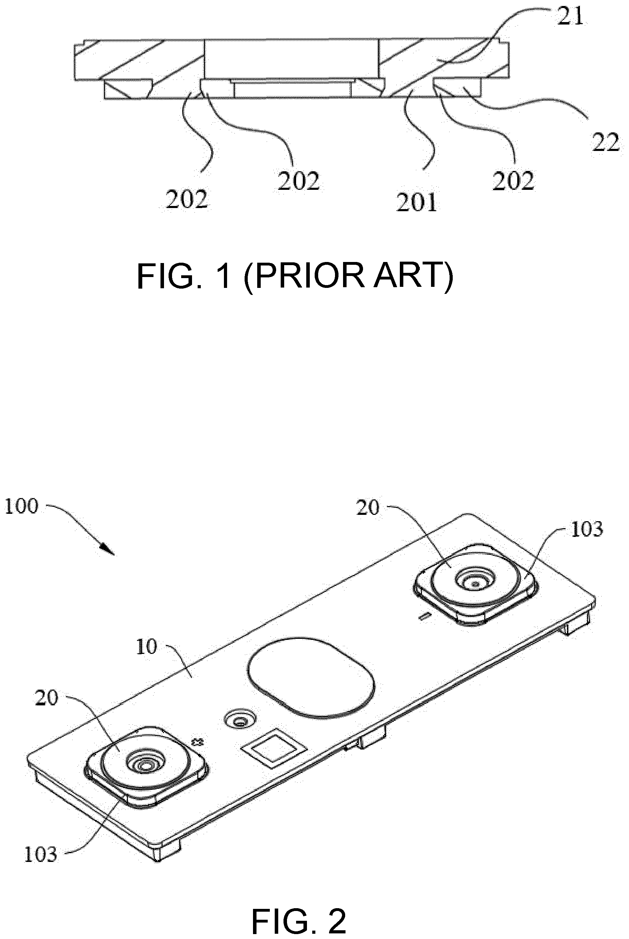

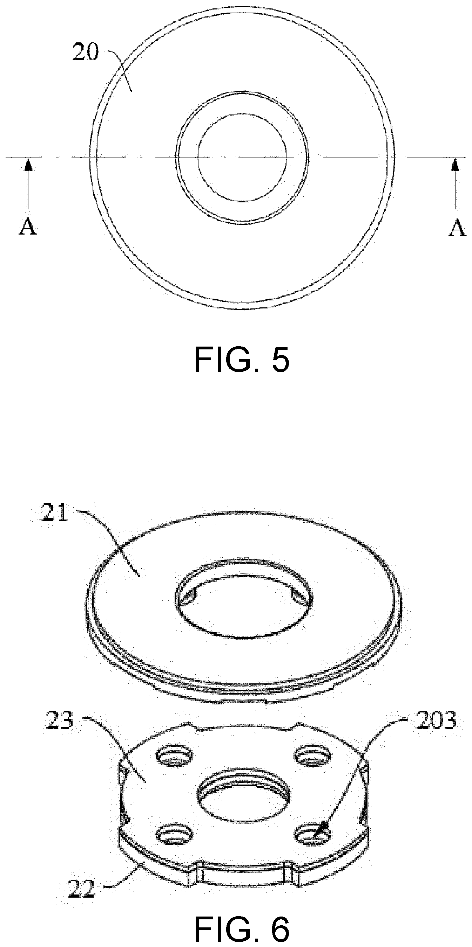

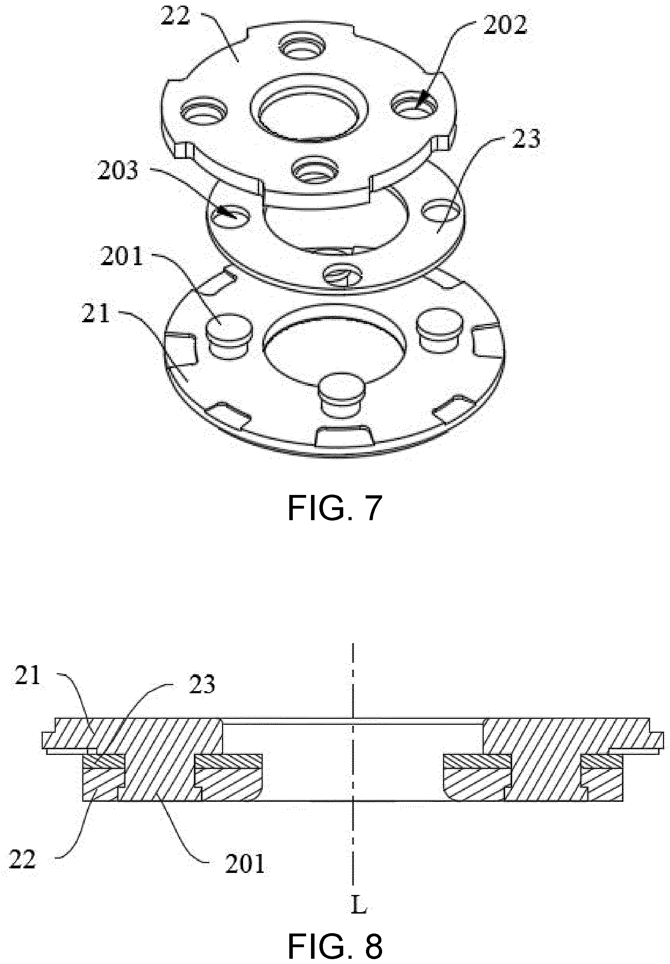

Please refer to FIG. 1 to FIG. 8. The disclosure provides a cover plate assembly, a battery cell, and a battery pack. The inventor knows a way to connect a battery cell to an external electrical connection member through an outer conductive member in the battery cell. The outer conductive member is generally made of a copper-aluminum composite plate or is formed by connecting a copper layer and an aluminum layer through adopting friction welding. However, the solution of adopting the composite plate has the issues of high raw material cost and complex process, and low material utilization during production. Adopting the friction welding has the issues of complex process, large machining volume, low material utilization, and extremely high cost. There is also the part composed of the copper plate and the aluminum plate. The copper plate and the aluminum plate are fixedly connected through riveting to form the outer conductive member, but in this way, a gap is likely to exist at a connection between the copper plate and the aluminum plate, which causes the connection to be unreliable. Please refer to FIG. 1. In order to prevent the issue of the gap at the connection between the copper plate and the aluminum plate caused by riveting, in the prior art, brazing is added between the copper plate and the aluminum plate. However, during an actual production process, it is found that when too much solder is applied in the middle, the solder may easily overflow from sides of a first metal layer 21 and a second metal layer 22 and/or overflow from a gap between a protrusion 201 and a first fitting hole 202, thereby affecting other processes, and when too little is applied, there is still a gap between adjacent surfaces of copper and aluminum and/or between the protrusion 201 and the first fitting hole 202, such that the contact area is too small and the strength is difficult to be ensured. Also, the uniformity of the solder may easily cause a riveting post on the aluminum to slightly protrude, leading to the issue of poor high consistency. For example, when the solder on adjacent surfaces of the first metal layer 21 and the second metal layer 22 is unevenly distributed, the height of a surface of the outer conductive member relative to the cover plate body 10 is inconsistent. Therefore, in order to solve the above issues, the disclosure provides a cover plate assembly and a battery cell. A cover plate assembly 100 includes a cover plate body 10, an outer conductive member 20, and an electrode lead-out member. The cover plate body 10 is provided with a through hole, the outer conductive member 20 is disposed on a side of the cover plate body 10 away from an electrode assembly, and the electrode lead-out member passes through the through hole and is connected to the outer conductive member 20.

Please refer to FIG. 2 to FIG. 8. In the embodiment, the outer conductive member 20 includes a first metal layer 21, a second metal layer 22, and a third metal layer 23. The first metal layer 21 includes a first metal, the second metal layer 22 includes a second metal, and the third metal layer 23 includes a third metal. The third metal layer 23 is disposed between the first metal layer 21 and the second metal layer 22, and the third metal layer 23 is respectively connected to the first metal layer 21 and the second metal layer 22 to form a first composite layer and a second composite layer, wherein the first composite layer includes the first metal and the third metal, and the second composite layer includes the second metal and the third metal. That is, in the disclosure, the third metal layer 23 is disposed between the first metal layer 21 and the second metal layer 22, so that the composite layers are formed at the junctions between the third metal layer 23 and the first metal layer 21 and the second metal layer 22, so that the first metal layer 21 and the second metal layer 22 are stably connected, and bonding surfaces thereof are larger to ensure the reliability and stability of the connection between the first metal layer 21 and the second metal layer 22. It should also be noted that the third metal layer 23 is disposed between the first metal layer 21 and the second metal layer 22 to prevent the issue of the height inconsistency of the surface of the outer conductive member relative to the cover plate body 10 caused by uneven solder filled between the first metal layer 21 and the second metal layer 22. Furthermore, the first metal layer 21, the second metal layer 22, and the third metal layer 23 are bonded together through hot pressing. During the hot pressing, surfaces of the first metal layer 21 and the second metal layer 22 are evenly stressed, thereby further ensuring the high consistency of the outer conductive member 20.

It should be noted that the outer conductive member 20 is preferably a negative conductive member of the battery cell.

Please refer to FIG. 2 and FIG. 4 to FIG. 8. In the embodiment, the third metal layer 23 is fixedly connected to the first metal layer 21 and the second metal layer 22 through hot pressing to form the first composite layer and the second composite layer, and the hot pressing thereof enables a stable connection between the first metal layer 21 and the second metal layer 22, the bonding surfaces are larger, and the hot pressing manner enables contact positions of the first metal layer 21 and the third metal layer 21 to be partially fused together to form a metal composite section, thereby forming the composite layer. The contact positions of the second metal layer 22 and the third metal layer 23 are partially fused to form a part of the metal composite section to improve the hot pressing effect and enable the third metal layer 23 to fill the gap between the first metal layer 21 and the second metal layer 22, thereby ensuring the reliability and stability of the connection between the first metal layer 21 and the second metal layer 22.

It should be noted that at the junction between the first metal layer 21 and the second metal layer 22, there are at least 3 main elements, which are respectively the main element of the first metal layer 21, the main element of the second metal layer 22, and the main element of the third metal layer 23. The main element refers to the element with the highest content among 3 different metal layers. In the embodiment, the first metal layer 21 is an aluminum layer, the second metal layer 22 is a copper layer, and the third metal layer 23 is at least one of nickel, silver, and tin, preferably nickel, so that the third metal layer 23 can prevent the first metal layer 21 and the second metal layer 22 from being oxidized and corroded.

Please refer to FIG. 2 and FIG. 4 to FIG. 8. In the embodiment, the content of the first metal in the first composite layer increases in a direction away from the first metal layer 21 toward the first metal layer 21, that is, the content of the first metal increases along a direction from the second metal layer 22 toward the first metal layer 21 to enable a good transition between the first metal layer 21 and the third metal layer 23, and ensure a reliable connection between the first metal layer 21 and the third metal layer 23; and/or the content of the second metal in the second composite layer increases in a direction away from the second metal layer 22 toward the second metal layer 22, that is, the content of the second metal is increases along a direction from the first metal layer 21 toward the second metal layer 22 to enable a good transition between the second metal layer 22 and the third metal layer 23, and ensure a reliable connection between the second metal layer 22 and the third metal layer 23, thereby ensuring the stability of the overall structure of the outer conductive member 20. Further, the content of the second metal in the second composite layer is greater than the content of the first metal in the first composite layer to ensure a firm connection between the layers while ensuring that the outer conductive member has excellent conductive properties.

Please refer to FIG. 2 and FIG. 4 to FIG. 8. In the embodiment, the outer conductive member 20 may be made by first processing the first metal layer 21 and the second metal layer 22 into a single component, and then fixedly connecting the first metal layer 21, the second metal layer 22, and the third metal layer 23 through hot pressing. Alternatively, the first metal layer 21, the second metal layer 22, and the third metal layer 23 may be fixedly connected through hot pressing, and then processed to form the outer conductive member 20. That is, the first metal layer 21, the second metal layer 22, and the third metal layer 23 may be separately processed and formed, and then connected to form the outer conductive member 20, or the first metal layer 21, the second metal layer 22, and the third metal layer 23 may be connected and formed, and then processed to form the outer conductive member 20, which can reduce the difficulty of manufacturing, and each component may be separately processed and formed to prevent material waste, which can improve material utilization to reduce material cost. In the embodiment, the connection process between the first metal layer 21, the second metal layer 22, and the third metal layer 23 may be to first fixedly connect the third metal layer 23 to one of the first metal layer 21 and the second metal layers 22, and then fixedly connect to the other one.

Please refer to FIG. 2 and FIG. 4 to FIG. 8. In the embodiment, the third metal layer 23 covers at least a part of a surface of the first metal layer 21 close to the second metal layer 22 or a part of a surface of the second metal layer 22 close to the first metal layer 21, that is, a partial region of the adjacent surface of the first metal layer 21 or the second metal layer 22 is covered with the third metal layer 22, so that the region covered with the third metal layer 23 forms the composite layer after hot pressing to ensure the reliable connection between the first metal layer 21 and the second metal layer 22 after hot pressing and fixing. Further, the third metal layer 23 completely covers the surface with a larger area among the surface of the first metal layer 21 close to the second metal layer 22 and the surface of the second metal layer 22 close to the first metal layer 21 to ensure that the third metal layer 23 can completely fill the gap between the two opposite surfaces of the first metal layer 21 and the second metal layer 22 after hot pressing and ensure that the connection area between the first metal layer 21 and the second metal layer 22 is large enough, thereby ensuring the conductive properties of the outer conductive member 20 and improving the reliability of the connection between the first metal layer 21 and the second metal layer 22.

Please refer to FIG. 2 and FIG. 4 to FIG. 8. In the embodiment, the third metal layer 23 evenly covers the surface of the first metal layer 21 close to the second metal layer 22 or the surface of the second metal layer 22 close to the first metal layer 21. Through evenly covering the surface of the first metal layer 21 or the second metal layer 22 with the third metal layer 23, affecting the hot pressing effect caused by uneven thickness of the third metal layer 23 can be prevented, thereby improving the reliability of the connection between the first metal layer 21 and the second metal layer 22 while preventing the issue of the height inconsistency of the outer conductive member 20 caused by the uneven thickness of the third metal layer 23 on the surface of the first metal layer 21 or the surface of the second metal layer 22 to improve the height consistency of the outer conductive member 20, thereby facilitating the connection of the outer conductive member 20 with other structures. For example, in the embodiment, the third metal layer 23 evenly covers the surface of the first metal layer 21 to form an integrated structure with the first metal layer 21 or the surface of the second metal layer 22 to form an integrated structure with the second metal layer 22 through electroplating. Of course, in some other embodiments, the third metal layer 23 may also evenly cover the first metal layer 21 or the second metal layer 22 through spraying.

Please refer to FIG. 2 and FIG. 4 to FIG. 8. In the embodiment, a surface of one of the first metal layer 21 and the second metal layer 22 close to the other one is provided with at least one protrusion 201, a surface of the other one close to the one is provided with a first fitting hole 202 corresponding to the at least one protrusion 201, and the third metal layer 23 is provided with a second fitting hole 203 corresponding to the protrusion 201. The at least one protrusion 201 is fittingly connected to the corresponding first fitting hole 202 and second fitting hole 203. For example, the surface of the first metal layer 21 close to the second metal layer 22 is provided with multiple protrusions 201, and the protrusions 201 are evenly spaced on the first metal layer 21 along a circumferential direction thereof. Correspondingly, the second metal layer 22 is provided with multiple first fitting holes 202 fitted to the protrusions 201, and the third metal layer 23 is provided with the second fitting holes 203 fitted to the protrusions 201. The protrusions 201 are fittingly connected to the corresponding first fitting holes 202 and second fitting holes 203, which further improves the reliability and stability of the connection between the first metal layer 21 and the second metal layer 22 through the riveting of the protrusions and the fitting holes. During the hot pressing process, the third metal layer 23 is respectively connected to the first metal layer 21 and the second metal layer 22 to form the first composite layer and the second composite layer. At the same time, the protrusions 201 may be synchronously pressed into the first fitting holes 202 and the second fitting holes 203 to implement the reliable connection between the first metal layer 21 and the second metal layer 22, that is, the two processes of hot pressing connection and riveting are implemented through one process, which reduces the difficulty of manufacturing to increase the production capacity and save cost.

Please refer to FIG. 2 and FIG. 4 to FIG. 8. In the embodiment, the protrusions 201 are symmetrically distributed on one of the first metal layer 21 and the second metal layer 22 along a central axis L of the outer conductive member 20, the first fitting holes 202 are symmetrically distributed on the other one of the first metal layer 21 and the second metal layer 22 along the central axis L of the outer conductive member 20, and the second fitting holes 203 are symmetrically distributed on the third metal layer 23 along the central axis L of the outer conductive member 20. That is, the protrusions 201, the first fitting holes 202, and the second fitting holes 203 are symmetrically distributed along the central axis L of the outer conductive member 20, so that when the first metal layer 21, the second metal layer 22, and the third metal layer 23 are fittingly connected, the protrusions 201 and the first fitting holes 202 and the second fitting holes 203 are fittingly connected to facilitate riveting. At the same time, the symmetrical distribution along the central axis L enables the first metal layer 21, the second metal layer 22, and the third metal layer 23 to be evenly stressed at each position when connected, thereby improving the stability and reliability of the connection between the metal layers.

Please refer to FIG. 2 and FIG. 4 to FIG. 8. In the embodiment, an outer surface of the protrusion 201 or an inner surface of the first fitting hole 202 is covered with the third metal layer 23, that is, in addition to covering the two opposite surfaces of the first metal layer 21 and the second metal layer 22, the third metal layer 23 also covers between the protrusion 201 and the first fitting hole 202, so that the third metal layer 23 can fill a gap between the protrusion 201 and the first fitting hole 202 after hot pressing and riveting to improve the riveting effect to further ensure the reliable connection between the first metal layer 21 and the second metal layer 22.

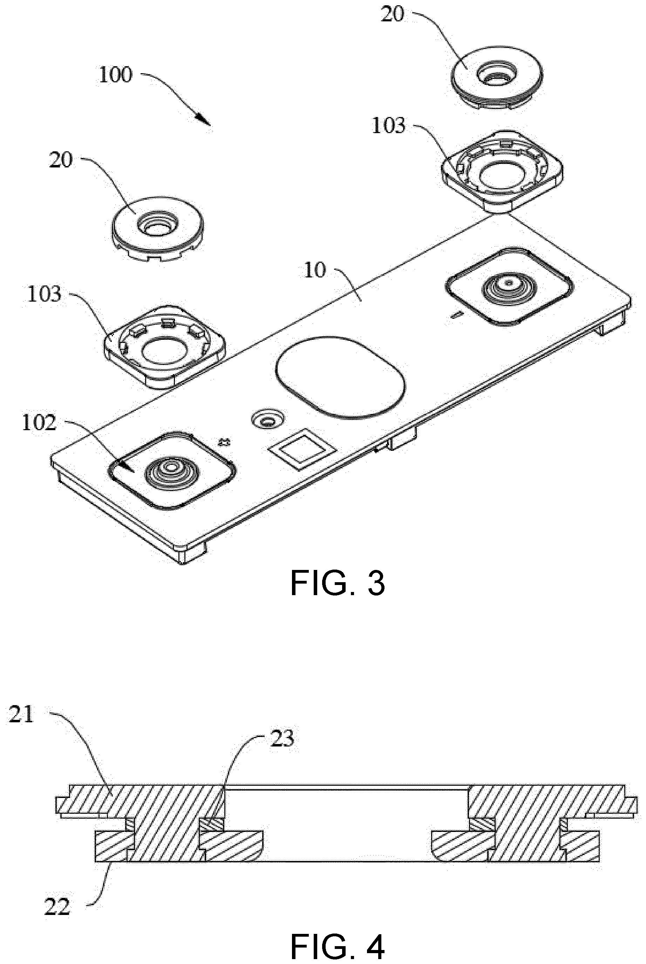

Please refer to FIG. 2 and FIG. 4. In the embodiment, along a radial direction of the outer conductive member 20, in a direction away from the through hole toward the through hole, a part of the surface of the second metal layer 22 close to the first metal layer 21 that exceeds the first metal layer 21 is not covered with the third metal layer 23, and the part not covered with the third metal layer 23 is connected to the electrode lead-out member, for example, through welding. Since the part is not covered with the third metal layer 23, the electrode lead-out member is directly welded to the second metal layer 22, thereby ensuring the stability and reliability of the welding between the electrode lead-out member and the second metal layer 22.

Please refer to FIG. 2 and FIG. 4 to FIG. 8. In the embodiment, the thickness of the third metal layer 23 is set between 0.5 µm and 1000 µm. In practice, it is found that if the thickness is lower than 0.5 um, it will easily cause the third metal layer 23 to be unable to completely fill the gap between the first metal layer 21 and the second metal layer 22 during hot pressing, which affects the reliability of the connection between the first metal layer 21 and the second metal layer 22, and if the thickness is higher than 1000 um, it will easily affect the hot pressing effect between the first metal layer 21, the second metal layer 22, and the third metal layer during hot pressing, which affects the reliability of the connection between the first metal layer 21 and the second metal layer 22, and there may be a thicker metal section between the first metal layer 21 and the second metal layer 22 after hot pressing, thereby easily affecting the overall conductive properties of the outer conductive member 20. Therefore, the thickness of the third metal layer 23 is set between 0.5 µm and 1000 µm, so that the third metal layer 23 can completely fill the gap between the first metal layer 21 and the second metal layer 22, and the hot pressing effect during hot pressing can also be ensured, thereby ensuring that the composite layer with sufficient thickness can be smoothly formed to ensure the reliability of the connection between the first metal layer 21 and the second metal layer 22, and also ensure the overall conductive properties of the outer conductive member 20. Furthermore, the thickness of the third metal layer 23 is set between 5 µm and 10 µm. If the thickness is lower than 5 µm, it will easily cause the inability to form the composite layer with sufficient thickness during hot pressing to affect the reliability of the connection between the first metal layer 21 and the second metal layer 22, and if the thickness is higher than 10 um, it will easily affect the overall thickness of the outer conductive member 20, which causes the surface of the outer conductive member 20 to protrude too high relative to the cover plate body 10, thereby affecting the subsequent connection between the outer conductive member 20 and other structures, and the assembly of the battery cell. Therefore, the thickness of the third metal layer 23 is set between 5 µm and 10 µm to ensure the formation of the composite layer with sufficient thickness, so that the connection between the first metal layer 21 and the second metal layer 22 is reliable, and the height of the outer conductive member 20 can also be prevented from being too high, thereby ensuring that the subsequent connection between the outer conductive member 20 and other structures, and the assembly of the battery cell can be smoothly performed. It should also be noted that in the embodiment, the thickness of the second composite layer is d, the total thickness of the first composite layer and the second composite layer is a, and the thickness of the second composite layer and the total thickness satisfy the relational expression 0.2a≤d≤0.9a, thereby ensuring the formation of the composite layer with sufficient thickness, so that the third metal layer 22 is reliably connected between the first metal layer 21 and the second metal layer 22 after hot pressing.

Please refer to FIG. 2 and FIG. 4 to FIG. 8. In the embodiment, the outer conductive member 20 is, for example, obtained through the following process. First, the first metal layer 21 and the second metal layer 22 are respectively processed into the required shapes. According to requirements, the third metal layer 23 is plated on the surface of the first metal layer 21 close to the second metal layer 22 or the surface of the second metal layer 22 close to the first metal layer 21 to facilitate the combination of the two. The first metal layer 21 and the second metal layer 22 are fitted together. The fitted first metal layer 21 and second metal layer 22 are placed on a hot press for hot pressing. A briquette is raised to a certain temperature and then moved downward, so that the briquette contacts and extrudes the surfaces of the first metal layer 21 and the second metal layer 22. During the hot pressing process, the third metal layer 23 respectively forms the composite layers with first metal layer 21 and the second metal layer 22, and the protrusion 201 may be synchronously riveted into the first fitting hole 202 to complete the processing of the outer conductive member 20. The two processes of hot pressing connection and riveting are implemented through one process, which reduces the difficulty of manufacturing to increase the production capacity and save cost. It should be noted that the briquette contacting the first metal layer 21 and the second metal layer 22 may be made of a material with high hardness or high thermal conductivity such as graphite, and the temperature of the briquette respectively corresponding to the first metal layer 21 and the second metal layer 22 should be lower than the melting point thereof, so that the third metal layer 23 may be combined with the first metal layer 21 and the second metal layer 22 to form the composite layers. It should be noted that after the first metal layer 21 and the second metal layer 22 in the outer conductive member 20 are peeled off, a residual area of the third metal layer 23 electroplated on one of the first metal layer 21 and the second metal layer 22 remaining on the other one of the first metal layer 21 and the second metal layer 22 is S1, the area of the third metal layer 23 is S2, and the area S1 and the area S2 satisfy the relational expression 0.352≤S1≤S2. Further, the residual area S1 and the third metal layer area S2 satisfy the relational expression 0.652≤S1≤0.952. For example, before hot pressing, the third metal layer 23 is electroplated on the surface of the second metal layer 22. After being peeled off, a part of the third metal layer 23 is adhered onto the first metal layer 21. That is, after being peeled off, the residual area S1 of the third metal layer 23 on the first metal layer 21 is set between 0.3 S2 and S2 to ensure that the third metal layer 23 and the first metal layer 22 and the second metal layer 22 are firmly fused and connected together during hot pressing, thereby improving the reliability and stability of the connection between the first metal layer 21 and the second metal layer 22.

Please refer to FIG. 2 to FIG. 8. The disclosure also provides a battery cell, which includes the cover plate assembly 100 and a shell. An electrode assembly is installed in the shell. One end of an electrode lead-out member in the cover plate assembly 100 is connected to the electrode assembly, and the other end passes through a through hole and is electrically connected to the second metal layer 22 of the cover plate assembly 100. The cover plate body 10 is provided with the through hole and is surrounded by a groove 102 and an outer support member 103. The outer support member 103 is disposed around the outer periphery of the outer conductive member 20 and is installed in the groove 102. The cover plate assembly 100 is the same as or similar to the structure of the cover plate assembly 100 described in the above embodiment. In order to prevent repetition, there will not be reiteration here.

The disclosure provides a cover plate assembly, a battery cell, and a battery pack. Through setting a third metal layer between a first metal layer and a second metal layer, the third metal layer respectively forms a first composite layer including a first metal and a third metal with the first metal layer and forms a second composite layer including a second metal and the third metal with the second metal layer. That is, the metal composite layers are formed at the contact positions of the third metal layer and the first metal layer and the second metal layer to ensure the reliability and stability of the connection between the first metal layer and the second metal layer, and the third metal layer can fill the gap between the first metal layer and the second metal layer to further improve the reliability and stability of the connection between the first metal layer and the second metal layer.

The above description is only preferred embodiments of the disclosure and an explanation of the technical principles used. Persons skilled in the art should understand that the scope involved in the disclosure is not limited to technical solutions formed by a specific combination of the above technical features, and should also cover other technical solutions formed by any combination of the above technical features or their equivalent features without departing from the concept of the disclosure, such as the technical solutions formed by replacing the above features with technical features having similar functions as disclosed in (but not limited to) the disclosure.

Except for the technical features in the specification, the remaining technical features are known to persons skilled in the art. In order to highlight the inventive features of the disclosure, the remaining technical features will not be described in detail here.

### List of Reference Numerals

100: cover plate assembly,
10: cover plate body,
20: outer conductive member,
102: groove,
103: outer support member,
21: first metal layer,
22: second metal layer,
23: third metal layer,
201: protrusion,
202: first fitting hole,
203: second fitting hole.

## Claims

1. A cover plate assembly (100), comprising:
a cover plate body (10), provided with a through hole;
an outer conductive member (20), disposed on a side of the cover plate body (10) away from an electrode assembly, the outer conductive member (20) comprising a first metal layer (21), a second metal layer (22), and a third metal layer (23) disposed between the first metal layer (21) and the second metal layer (22), wherein the first metal layer (21) comprises a first metal, the second metal layer (22) comprises a second metal, and the third metal layer (23) comprises a third metal,
wherein the third metal layer (23) is respectively connected to the first metal layer (21) and the second metal layer (22) to form a first composite layer and a second composite layer, the first composite layer comprises the first metal and the third metal, and the second composite layer comprises the second metal and the third metal;
an electrode lead-out member, passing through the through hole and electrically connected to the outer conductive member (20).

2. The cover plate assembly (100) according to claim 1, wherein a content of the first metal in the first composite layer increases in a direction away from the first metal layer (21) toward the first metal layer (21).

3. The cover plate assembly (100) according to claim 1, wherein a content of the second metal in the second composite layer increases in a direction away from the second metal layer (22) toward the second metal layer (22).

4. The cover plate assembly (100) according to claim 1, wherein a content of the second metal in the second composite layer is greater than a content of the first metal in the first composite layer.

5. The cover plate assembly(100) according to claim 1, wherein the third metal layer (23) covers at least a part of a surface of the first metal layer (21) close to the second metal layer (22) or a part of a surface of the second metal layer (22) close to the first metal layer (21).

6. The cover plate assembly (100) according to claim 5, wherein the third metal layer (23) completely covers one with a larger area of the surface of the first metal layer (21) close to the second metal layer (22) and the surface of the second metal layer (22) close to the first metal layer (21), and the third metal layer (23) evenly covers the surface of the first metal layer (21) close to the second metal layer (22) or the surface of the second metal layer (22) close to the first metal layer (21).

7. The cover plate assembly (100) according to claim 1, wherein a surface of one of the first metal layer (21) and the second metal layer (22) close to other one of the first metal layer (21) and the second metal layer (22) is provided with at least one protrusion (201), a surface of the other one of the first metal layer (21) and the second metal layer (22) close to the one of the first metal layer (21) and the second metal layer (22) is provided with a first fitting hole (202) corresponding to the at least one protrusion (201), the third metal layer (23) is provided with a second fitting hole (203) corresponding to the at least one protrusion (201), and the at least one protrusion (201) is fittingly connected to the corresponding first fitting hole (202) and second fitting hole (203).

8. The cover plate assembly (100) according to claim 7, wherein a surface of the first metal layer (21) close to the second metal layer (22) is provided with the at least one protrusion (201), a surface of the second metal layer (22) close to the first metal layer (21) is provided with the first fitting hole (202) fitted to the at least one protrusion (201), the third metal layer (23) is provided with the second fitting hole (203) fitted to the at least one protrusion (201), and the at least one protrusion (201) is fittingly connected to the corresponding first fitting hole (202) and second fitting hole (203).

9. The cover plate assembly (100) according to claim 7, wherein the at least one protrusion (201) is symmetrically distributed on one of the first metal layer (21) and the second metal layer (22) along a central axis of the outer conductive member (20), the first fitting holes (202) are symmetrically distributed on other one of the first metal layer (21) and the second metal layer (22) along the central axis of the outer conductive member (20), and the second fitting holes (203) are symmetrically distributed on the third metal layer (23) along the central axis of the outer conductive member (20).

10. The cover plate assembly (100) according to claim 7, wherein an outer surface of the at least one protrusion (201) or an inner surface of the first fitting hole (202) is covered with the third metal layer (23).

11. The cover plate assembly (100) according to claim 1, wherein along a radial direction of the outer conductive member (20), in a direction away from the through hole toward the through hole, a part of a surface of the second metal layer (22) close to the first metal layer (21) that exceeds the first metal layer (21) is not covered with the third metal layer (23), and a thickness of the third metal layer (23) is set between 0.5 µm and 1000 µm.

12. The cover plate assembly (100) according to claim 11, wherein the thickness of the third metal layer (23) is set between 5 µm and 10 µm.

13. The cover plate assembly (100) according to claim 1, wherein a thickness of the second composite layer is d, a total thickness of the first composite layer and the second composite layer is a, and a relational expression 0.2a≤d≤0.9a is satisfied, and the third metal layer (23) comprises at least one of nickel, silver, and tin.

14. A battery cell, comprising: the cover plate assembly (100) according to any one of claims 1 to 13, and
a shell, installed with the electrode assembly,
wherein an end of the electrode lead-out member in the cover plate assembly (100) is connected to the electrode assembly, and other end passes through the through hole and is electrically connected to the second metal layer (22) in the cover plate assembly (100).

15. A battery pack, comprising the battery cell according to claim 14.

## Amended claims

### Amended claims in accordance with Rule 137(2) EPC.

1. A cover plate assembly (100), comprising:
a cover plate body (10), provided with a through hole;
an outer conductive member (20), disposed on a side of the cover plate body (10) away from an electrode assembly, the outer conductive member (20) comprising a first metal layer (21), a second metal layer (22), and a third metal layer (23) disposed between the first metal layer (21) and the second metal layer (22), wherein the first metal layer (21) comprises a first metal, the second metal layer (22) comprises a second metal, and the third metal layer (23) comprises a third metal, wherein there are at least 3 main elements between the first metal layer (21) and the second metal layer (22), the at least 3 main elements respectively refer to the elements with the highest content of the first metal layer (21), the second metal layer (22) and the third metal layer (23), the at least 3 main elements are respectively the main element of the first metal layer (21), the main element of the second metal layer (22), and the main element of the third metal layer (23), the main element of the first metal layer (21) is aluminum, the main element of the second metal layer (22) is copper, and the main element of the third metal layer (23) is at least one of nickel, silver, and tin; and
an electrode lead-out member, passing through the through hole and electrically connected to the outer conductive member (20);
wherein the cover plate assembly is **characterized in that**
the third metal layer (23) is respectively connected to the first metal layer (21) and the second metal layer (22) by hot pressing to form a first composite layer and a second composite layer, the first composite layer comprises the first metal and the third metal, and the second composite layer comprises the second metal and the third metal.

2. The cover plate assembly (100) according to claim 1, wherein a content of the first metal in the first composite layer increases in a direction from a position away from the first metal layer (21) toward a position closer to the first metal layer (21).

3. The cover plate assembly (100) according to claim 1, wherein a content of the second metal in the second composite layer increases in a direction from a position away from the second metal layer (22) toward a position closer to the second metal layer (22).

4. The cover plate assembly (100) according to claim 1, wherein a content of the second metal in the second composite layer is greater than a content of the first metal in the first composite layer.

5. The cover plate assembly(100) according to claim 1, wherein the third metal layer (23) covers at least a part of a surface of the first metal layer (21) close to the second metal layer (22) or a part of a surface of the second metal layer (22) close to the first metal layer (21).

6. The cover plate assembly (100) according to claim 5, wherein the third metal layer (23) completely covers one with a larger area of the surface of the first metal layer (21) close to the second metal layer (22) and the surface of the second metal layer (22) close to the first metal layer (21), and the third metal layer (23) evenly covers the surface of the first metal layer (21) close to the second metal layer (22) or the surface of the second metal layer (22) close to the first metal layer (21).

7. The cover plate assembly (100) according to claim 1, wherein a surface of one of the first metal layer (21) and the second metal layer (22) close to other one of the first metal layer (21) and the second metal layer (22) is provided with at least one protrusion (201), a surface of the other one of the first metal layer (21) and the second metal layer (22) close to the one of the first metal layer (21) and the second metal layer (22) is provided with a first fitting hole (202) corresponding to the at least one protrusion (201), the third metal layer (23) is provided with a second fitting hole (203) corresponding to the at least one protrusion (201), and the at least one protrusion (201) is fittingly connected to the corresponding first fitting hole (202) and second fitting hole (203).

8. The cover plate assembly (100) according to claim 7, wherein a surface of the first metal layer (21) close to the second metal layer (22) is provided with the at least one protrusion (201), a
surface of the second metal layer (22) close to the first metal layer (21) is provided with the first fitting hole (202) fitted to the at least one protrusion (201), the third metal layer (23) is provided with the second fitting hole (203) fitted to the at least one protrusion (201), and the at least one protrusion (201) is fittingly connected to the corresponding first fitting hole (202) and second fitting hole (203).

9. The cover plate assembly (100) according to claim 7, wherein the at least one protrusion (201) is symmetrically distributed on one of the first metal layer (21) and the second metal layer (22) along a central axis of the outer conductive member (20), the first fitting holes (202) are symmetrically distributed on other one of the first metal layer (21) and the second metal layer (22) along the central axis of the outer conductive member (20), and the second fitting holes (203) are symmetrically distributed on the third metal layer (23) along the central axis of the outer conductive member (20).

10. The cover plate assembly (100) according to claim 7, wherein an outer surface of the at least one protrusion (201) or an inner surface of the first fitting hole (202) is covered with the third metal layer (23).

11. The cover plate assembly (100) according to claim 1, wherein along a radial direction of the outer conductive member (20), in a direction from a position away from the through hole toward a position closer to the through hole, a part of a surface of the second metal layer (22) close to the first metal layer (21) that exceeds the first metal layer (21) is not covered with the third metal layer (23), and a thickness of the third metal layer (23) is set between 0.5 µm and 1000 µm.

12. The cover plate assembly (100) according to claim 11, wherein the thickness of the third metal layer (23) is set between 5 µm and 10 µm.

13. The cover plate assembly (100) according to claim 1, wherein a thickness of the second composite layer is d, a total thickness of the first composite layer and the second composite layer is a, and a relational expression 0.2a≤d≤0.9a is satisfied, and the third metal layer (23) comprises at least one of nickel, silver, and tin.

14. A battery cell, comprising: the cover plate assembly (100) according to any one of claims 1 to 13, and
a shell, installed with the electrode assembly,
wherein an end of the electrode lead-out member in the cover plate assembly (100) is connected to the electrode assembly, and other end passes through the through hole and is electrically connected to the second metal layer (22) in the cover plate assembly (100).

15. A battery pack, comprising the battery cell according to claim 14.
